# DEMANDE DE BREVET EUROPEEN

(11) **EP 0 654 891 A1**
(43) Date de publication de la demande: **24.05.1995**
(21) Numéro de dépôt: 94118293.3
(22) Date de dépôt: 21.11.1994
(51) Int. Cl.: H02P 7/00, B60S 1/08

(54) **Dispositif électronique de commande d'un moteur électrique à courant continu à deux bornes, pour système d'entraînement fonctionnant en va et vient et application à un système d'essuyage de vitre de véhicule**

(30) Priorité: 19.11.1993 FR 9313830
(71) Demandeur: VALEO SYSTEMES D'ESSUYAGE, 78180 Montigny-Le-Bretonneux (FR)
(72) Inventeur: Desrus, Dany, F-94260 Fresnes (FR); Robino-Rizet, Jean-Luc, F-91300 Massy (FR); Couetoux, Hervé, Auburn Hills, MI 48326 (US)
(74) Mandataire: Gamonal, Didier

(57) **Abrégé**

La présente invention permet de contrôler d'une manière simple le fonctionnement du moteur d'entraînement lors de son retournement.

Selon l'invention un circuit de contrôle asservi à la mise en conduction d'un transistor T placé dans le chemin d'alimentation du moteur en série avec lui de façon à réduire le bruit de retournement dans le mouvement de va et vient.

Application à l'essuyage de vitre automobile

## Description

La présente invention concerne un dispositif électronique de commande d'un moteur électrique à courant continu. Un tel moteur sert de moteur d'entraînement et fonctionne en va et vient. Un tel moteur est appliqué dans un système d'essuyage et entraîne un système d'essuyage dans un mouvement oscillant. Il génère un bruit acoustique important du fait du changement de sens dans le mouvement de balayage.

En effet, dans l'état de la technique, on sait déjà commander en va et vient le mouvement d'un bras d'essuyage dans un système d'essuyage pour vitre de véhicule notamment. Cependant lors du changement de sens d'oscillations, appelé aussi retournement du balai, un bruit important est généré notamment du fait que les jeux mécaniques s'inversent d'une part, et d'autre part que le régime du moteur passe d'une vitesse nominale d'un premier sens à une vitesse nominale d'un second sens. Du fait des accélérations entraînées un bruit important est généré.

Avec l'augmentation du confort des véhicules, le bruit de retournement devient concurrent de divers autres bruits qui autrefois le masquaient et qui aujourd'hui ne servent plus à le masquer.

C'est un objet de la présente invention que de proposer un système permettant de limiter le bruit acoustique de retournement.

En effet, la présente invention concerne un dispositif électronique de commande d'un moteur électrique à courant continu à deux bornes. Un tel moteur sert pour l'entraînement fonctionnant en va et vient notamment d'un système d'essuyage.

L'invention se caractérise notamment en ce que le dispositif électronique de commande comporte :
- un moyen de détection d'une commande d'inversion du sens de rotation du moteur,
- un circuit de commande qui reçoit le signal de détection et produit en réponse un signal de commande,
- un interrupteur commandé, connecté entre l'une ou l'autre des deux bornes du moteur électrique et une polarité d'alimentation et dont l'électrode de commande reçoit le signal de commande,
- le signal de commande ouvrant l'interrupteur commandé, puis rétablissant lentement sa conduction.

L'invention concerne aussi un système d'entraînement comme un système d'essuyage pour vitre de véhicule.

D'autres caractéristiques et avantages de la présente invention seront mieux compris à l'aide de la description et des dessins annexés qui sont :
- la figure 1 : un schéma bloc d'un mode de réalisation préféré de l'invention ;
- la figure 2 : trois chronogrammes du fonctionnement lors du retournement du schéma de la figure 1 ;
- la figure 3 : un schéma d'un circuit utilisé dans le schéma bloc de la figure 1 ;
- la figure 4 : des diagrammes 4a à 4f représentant le fonctionnement du schéma bloc de la figure 1 utilisant le circuit de la figure 3 ;
- la figure 5 : un schéma bloc d'un mode de réalisation préféré de l'invention ;
- les figures 6a à 6i : des chronogrammes du fonctionnement de la figure 5.

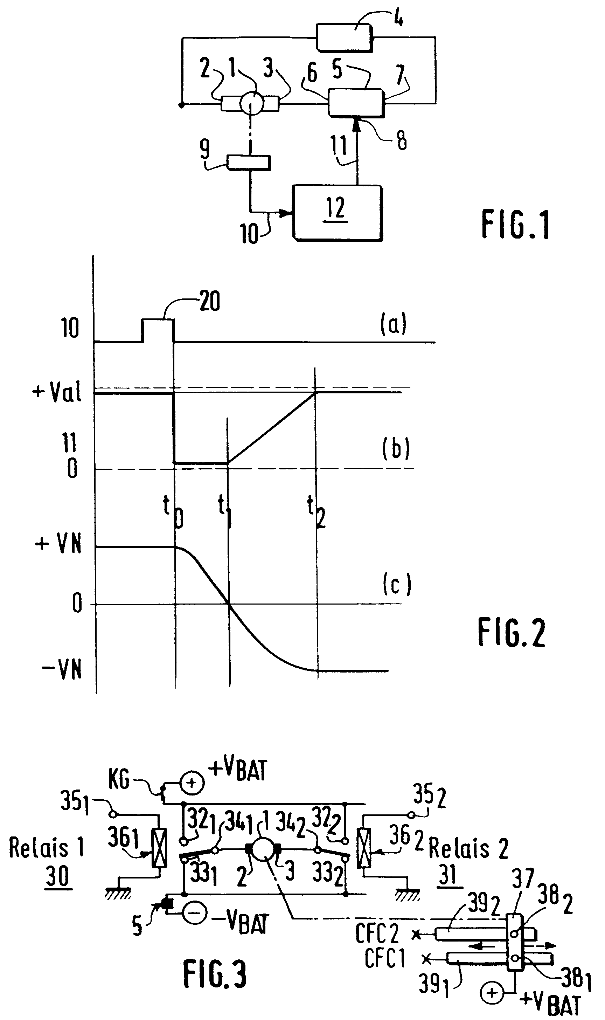

A la figure 1, on a représenté un schéma bloc d'un mode de réalisation préféré de l'invention. Le moteur électrique 1 est doté de deux balais, qui sont électriquement connectés à un réseau d'alimentation continu par des bornes 2 et 3. L'alimentation électrique en courant continu est produite par une source 4, qui en fonction de la position du système d'entraînement non représenté aux dessins, permet d'inverser la polarité appliquée aux bornes du moteur. La source 4 est connectée d'une part à la borne 2 du moteur et d'autre part à une borne 7 d'un circuit constitué principalement par un interrupteur commandable 5. L'autre borne 6 de l'interrupteur commandable 5 est connectée à la borne libre 3 du moteur électrique 1.

D'autre part, le système d'entraînement comporte un moyen permettant de détecter une commande d'inversion du sens de rotation du moteur. Le moyen 9 peut être constitué par deux capteurs de fin de course disposés de part et d'autre des points extrêmes de la course d'oscillation du système d'entraînement dans son mouvement de va et vient. Les signaux de détection sont transmis par une entrée 10 à un circuit de commande 12 qui reçoit donc le signal de détection et produit en réponse un signal de commande. Le signal de commande issu du dispositif de commande 12 est transmis par une liaison 11 à la borne de commande 8 de l'interrupteur commandable 5.

On va maintenant décrire à l'aide de la figure 2 le mode de fonctionnement du dispositif électronique de commande de l'invention.

A la figure 2a à l'instant t₀, le moyen de détection d'une commande d'inversion du sens de rotation du moteur 10 produit une impulsion 20 qui informe le dispositif électronique de commande que le sens de rotation du moteur doit être inversé.

Le créneau 20 de la figure 2a sert à la fois par la ligne 10 à valider le dispositif de commande 12 et d'autre part permet de configurer la source d'alimentation continue 4 dans la polarité opposée quand cela sera nécessaire ainsi qu'on le verra plus loin.

Selon l'invention, le circuit de commande 12 produit un signal de commande 11 (représenté figure 2b) qui permet d'ouvrir à la date t₀ l'interrupteur commandable 5.

A la figure 2b on a représenté le chronogramme du signal de commande 11 de l'interrupteur commandable 5 selon le fonctionnement de l'invention à la date t₀, la tension aux bornes du moteur qui était égale à +Val, qui représente la tension d'alimentation, chute à la valeur 0 à cause de l'ouverture du composant. Puis pendant une durée allant jusqu'à la date t₁, la tension reste nulle puis le dispositif de commande produit un signal de commande 11, en forme de rampe ascendante, de façon à retourner à la valeur +Val à la date t₂. De cette façon, le moteur peut se comporter de manière optimale en réglant à la fois la durée d'annulation de la tension à la date t₁ et la pente de la rampe c'est-à-dire la durée t₂-t₁ de façon à rendre optimal le comportement du système d'entraînement en va et vient, notamment au point de vue du bruit acoustique de retournement.

En particulier, les inventeurs ont constaté que le bruit de retournement d'un système d'essuyage était principalement dû à la phase de réaccélération du mouvement après le ralentissement et que la phase de ralentissement nécessitait seulement une annulation de la tension plutôt qu'un contrôle asservi, plus complexe à réaliser.

Par contre, de façon à réduire le bruit dû au redémarrage, il est nécessaire de limiter la puissance reçue par le moteur pendant la phase de redémarrage de façon à l'amener lentement en commutation douce au maximum.

De ce fait, grâce au système de l'invention, la vitesse de rotation du moteur s'inverse à la date t₁ et redémarre lentement dans le sens inverse du sens initial jusqu'à la valeur nominale de signes opposés -Vn par rapport à la vitesse +Vn représentée à la figure 2c. La vitesse nominale cesse à la date t₀ pour s'inverser et repasser à la vitesse nominale contraire à la date t₂.

A la figure 3, on a représenté un mode de réalisation préféré du circuit 4 permettant de produire le retournement du mouvement du système d'essuyage.

De manière classique le circuit 4 est constitué par deux relais électromécaniques 30 et 31 qui comportent deux contacts et un doigt mobile. Le relais 30 comporte un doigt mobile connecté à un contact 34-1, connecté à la borne 2 du moteur 1, tandis que le relais 31 comporte un doigt mobile connecté à une borne 34-2 connectée à la borne 3 du moteur 1. D'autre part, les bornes 32-1 et 32-2 des relais 30 et 31 sont connectées à la tension positive +Vbat par l'intermédiaire d'un relais KG de marche continue tandis que les bornes 33-1 et 33-2 sont connectées par l'intermédiaire de l'interrupteur commandé 5 à la polarité -Vbat de la batterie. Enfin les relais 30 et 31 comportent respectivement des bornes de commande 35-1 et 35-2 qui commandent des bobines électromagnétiques 36-1 et 36-2 de changement de contact. En particulier les relais peuvent être du type bistable.

Le moteur 1 est relié mécaniquement à une paire de frotteurs montés sur un équipage mobile 37, les frotteurs étant 38-1 et 38-2 et qui sont connectés tous les deux à une tension positive comme le + de la batterie +Vbat. Deux pistes respectivement 39-1 et 39-2 sont installées dans le moyen de détection des fins de course 9. Deux bornes d'accès respectivement CFC1 et CFC2 sont prises sur les pistes respectivement 39-1 et 39-2 et sont reliées par l'intermédiaire éventuellement d'un circuit de pilotage convenable aux bornes d'entrée respectivement 35-1 et 35-2 pour permettre l'inversion du sens de rotation du moteur en fonction de la position atteinte par l'équipage mobile 7 relié au mouvement du système d'essuyage notamment ou de tout autre système d'actionnement utilisé dans l'invention.

Dans un autre mode de réalisation, le moteur est relié mécaniquement aux pistes 39-1 et 39-2. Les frotteurs 38-1 et 38-2 sont montés sur le support 37 qui est fixe. Les signaux CFC1 et CFC2 sont pris sur les frotteurs 38-1 et 38-2.

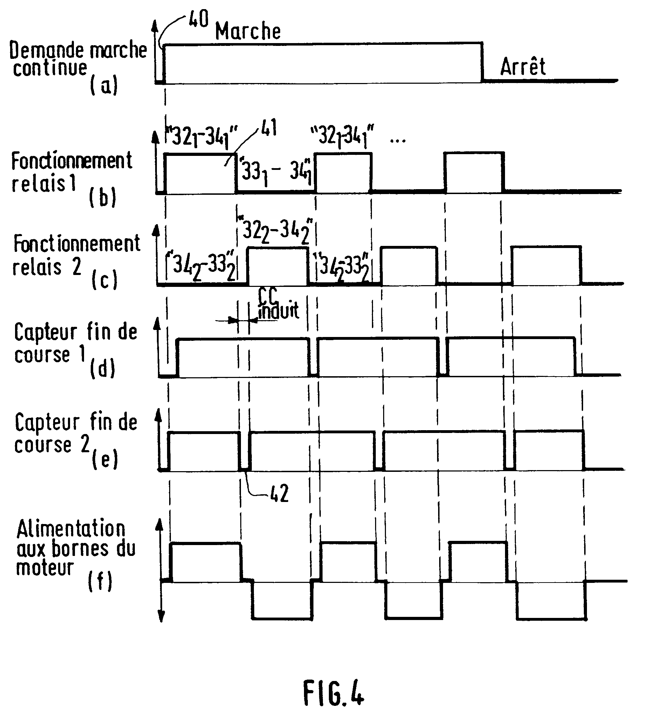

A la figure 4, on a représenté six chronogrammes de commande des relais de la figure 3. A la figure 4a on a représenté la demande de marche continue qui présente une forme de créneau pendant tout le temps de la marche continue du système d'actionnement, et qui présente un front montant 40 quand l'interrupteur KG est fermé par l'utilisateur qui demande la mise en route du système.

Dans cette position initiale, le capteur de fin de course 1, constitué par la piste 39-1, n'est pas connecté au potentiel +Vbat alors qu'à la figure 4e on remarque que le capteur de fin de course 2, est connecté au +Vbat ainsi qu'il est représenté dans la partie droite du dessin représentatif de la figure 3 pour le détecteur de fin de course 9.

Dans ces conditions, le relais 1 bascule en position 32-1 qui est représenté par un créneau 41. Dans cette circonstance le relais 2, référencé 31 à la figure 3, présente un état où il est sur le contact 33-2. Le courant circule dans le moteur dans un premier sens ce qui entraîne le moteur dans un premier sens de rotation. Quand le chariot mobile 37 se déplace dans le capteur de fin de course, il laisse à la tension +Vbat les sorties CFC1 et CFC2 ainsi qu'il est représenté aux chronogrammes respectivement des figures 4d et 4e.

Quand on arrive à la première fin de course, on remarque à la figure 3, que le frotteur 38-2 parvient dans une position où il n'est pas sur la piste 39-2 tandis que le frotteur 38-1 reste encore sur la piste 39-1 connecté au +Vbat. Quand on arrive à la première fin de course, la zone 42 correspond à un court-circuit du moteur. Ce court-circuit produit un freinage. Le circuit de contrôle ou de commande du système d'essuyage remet 32 -2 en contact avec 34-2, ce qui commande le moteur dans l'autre sens. De ce fait, ainsi qu'on le représente par la zone 42 sur la diagramme de la figure 4e, le signal de détection de fin de course sur le capteur de fin de course CFC2 repasse à 0, ce qui permet par l'intermédiaire du circuit de pilotage des relais d'inverser le sens de fonctionnement du relais 31, qui remonte dans un état 32-2 sur 34-2 ainsi qu'il est représenté sur le diagramme de la figure 4c. Puis le relais 30 bascule lui aussi sur la position 33-1 sur 34-1. A la figure 4b, ce basculement se produit avant 32-2 sur 34-2. De ce fait, la tension +Vbat est connectée sur la borne 3 du moteur 1 et le courant circule dans l'autre sens ce qui entraîne le moteur dans un second sens de rotation.

A la figure 4f, on a représenté, à l'ordre 1, la forme d'onde de la tension d'alimentation aux bornes du moteur 1. On remarque que, lorsque le changement de sens a lieu, la tension est nulle ce qui entraîne un court-circuit de l'induit. C'est pendant cette zone de temps, correspondant à la zone 42 sur le diagramme de la figure 4e, que les phénomènes de bruit de retournement apparaissent et sont limités par la mise en fonctionnement de l'interrupteur commandé 5.

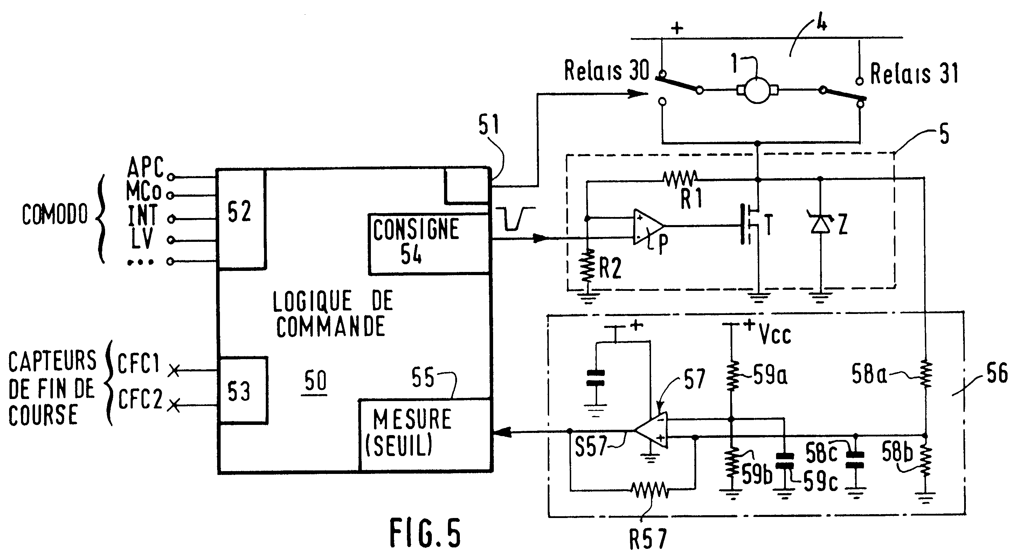

A la figure 5, on a représenté de manière schématique, un mode de réalisation préféré de l'invention. Le circuit 4 d'inversion de sens de rotation du moteur a été représenté schématiquement et ne sera pas décrit plus avant. Les bobines des relais 30 et 31 (non représentées à la figure 5) sont pilotées par une sortie 51 d'un circuit de commande 50 constitué notamment par un microcontrôleur ou par un circuit intégré spécialisé.

Le microcontrôleur ou circuit de commande 50 présente une série de ports d'entrée 52 qui reçoivent notamment l'information de mise en marche du véhicule +APC et les informations de commande issues du commodo, notamment la mise en marche continue MCO, l'intermittence Int et le lave-glace LV etc.

D'autre part le circuit de commande 50 présente des ports d'entrée 53 connectés aux signaux de détection de fin de course CFC1 et CFC2 décrits à l'aide des figures 3 et 4.

L'interrupteur commandable 5 est constitué principalement par un transistor T à effet de champ dont le circuit drain-source est monté en parallèle avec une diode Zener Z. Le drain du transistor T est connecté en commun avec la cathode de la diode Zener Z au point commun de potentiel bas du circuit d'alimentation 4. La source du transistor T et l'anode de la diode Zener Z sont connectées à la masse c'est-à-dire à la polarité négative de la batterie.

D'autre part, ainsi qu'il est connu, le transistor T est commandé par l'intermédiaire d'un circuit P constitué par un amplificateur opérationnel connecté par l'intermédiaire de sa borne positive d'entrée d'une part au drain du transistor T par l'intermédiaire d'une resistance R1 et d'autre part à la masse par l'intermédiaire d'une résistance R2.

La borne - de l'amplificateur P est connectée directement à un port de sortie 54 du circuit de commande. Le port de sortie 54 est programmé de façon à générer la forme d'onde représentée à la figure 2b en fonction de la détection des fins de course.

Dans un mode de réalisation le transistor à effet de champ est choisi de type MOS de façon à limiter la chute de tension et faciliter la commande de l'interrupteur.

Dans un autre mode de réalisation, le transistor T est de type bipolaire.

Dans un mode de réalisation, quand l'information de fin de course CFC1 ou CFC2 passe à la valeur 0, le circuit de commande 50 produit sur le port de sortie 54 un front descendant, qui permet par l'intermédiaire du circuit de pilotage P d'ouvrir le transistor T. Le courant dans le moteur s'annule et le moteur passe en fonctionnement de roue libre. Les frottements du système d'actionnement, comme le système d'essuyage, réduisent la vitesse jusqu'à l'arrêt du moteur. Du fait de l'ouverture du transistor T, le port de sortie 51 du circuit de commande 50 produit les signaux de pilotage des bobines des relais 30 et 31. On peut procéder librement à la commutation des deux relais à n'importe quel instant pendant que le transistor T est ouvert, puisque la polarité négative n'est plus accessible par le moteur 1. C'est un avantage de la présente invention de (imiter ainsi les risques d'amorçage provoqués par la mise à la polarité négative de l'une des bornes quand l'autre borne reste à la tension positive.

On peut préparer aussi le changement de sens de marche par l'inversion de commande des relais 30 et 31. Quand les relais sont commutés, ce qui peut être vérifié par un testage non représenté des relais, on peut rétablir lentement la commande du transistor T.

Dans un premier mode de réalisation simplifié, le rétablissement de la commande se fait par une rampe pré-programmée dont la forme est produite sous la forme d'une table de valeurs qui permet à un convertisseur numérique analogique connecté au port de sortie 54 dans le circuit de commande 50 de générer une forme d'onde, en forme de rampe croissante, connectée à la borne d'entrée négative de l'amplificateur P de l'interrupteur commandable 5. Dans ce cas, la commutation se fait avec un asservissement et la tension aux bornes du transistor est appliquée à l'entrée positive de l'amplificateur opérationnel P. Cet asservissement permet de faire baisser progressivement la tension entre drain et source selon la rampe prédéterminée. De ce fait la tension aux bornes du moteur augmente progressivement, ce qui a pour effet de contrôler l'accélération du moteur sans le laisser s'emballer du fait des faibles impédances présentées dans la ligne d'alimentation moteur si la commutation se faisait brutalement. De ce fait, on réduit l'accélération du moteur ce qui réduit d'autant les efforts au redémarrage et en particulier limite donc le bruit de retournement. Pendant cette phase, dans un mode de réalisation préféré, le transistor T travaille en régime linéaire.

Dans ce mode de réalisation simplifié, l'instant t₁ de redémarrage est préenregistré et dimensionné en fonction du système utilisé. De même l'instant t₂ de mise en pleine conduction est préprogrammé et dépend du système et de ces réglages initiaux.

Une telle solution est économique pour un système qui ne subit pas de vieillissement et qui est bien connu dans son fonctionnement.

Dans le cas où l'on veut tenir compte du vieillissement du système asservi et aussi des possibilités de variations de la charge, qui peuvent entraîner des glissements importants dans le réglage du système, on a prévu d'ajouter un circuit 56 représenté à la figure 5, qui permet de faire démarrer la rampe d'excitation de la conduction du transistor T produite par le port de sortie 54, dès que la tension mesurée aux bornes du transistor T dépasse un seuil prédéterminé.

Dans le mode de réalisation représenté à la figure 5, le circuit 56 de mesure de la tension aux bornes source et drain du transistor T est constitué principalement par un comparateur 57, dont une première entrée + est connectée par un pont diviseur 58a,58b à la borne de source du transistor T. Un condensateur de filtrage 58c est prévu.

La borne d'entrée négative de l'amplificateur 57 est connectée à une tension +VCC par l'intermédiaire d'un second pont diviseur 59a,59b, et est éventuellement muni aussi d'un condensateur de filtrage 59c. La borne de sortie S57 de l'amplificateur 57, montée en comparateur de tension par la résistance de rétroaction R57, est connectée à l'entrée d'un port d'entrée 55 du circuit de commande 50, qui élabore un signal de commande (non représenté) qui permet de démarrer la génération de la rampe d'augmentation de la conduction et de la contrôler en fonction de la tension mesurée instantanée.

Dans ce mode de réalisation la date de démarrage de la rampe dépend des circonstances.

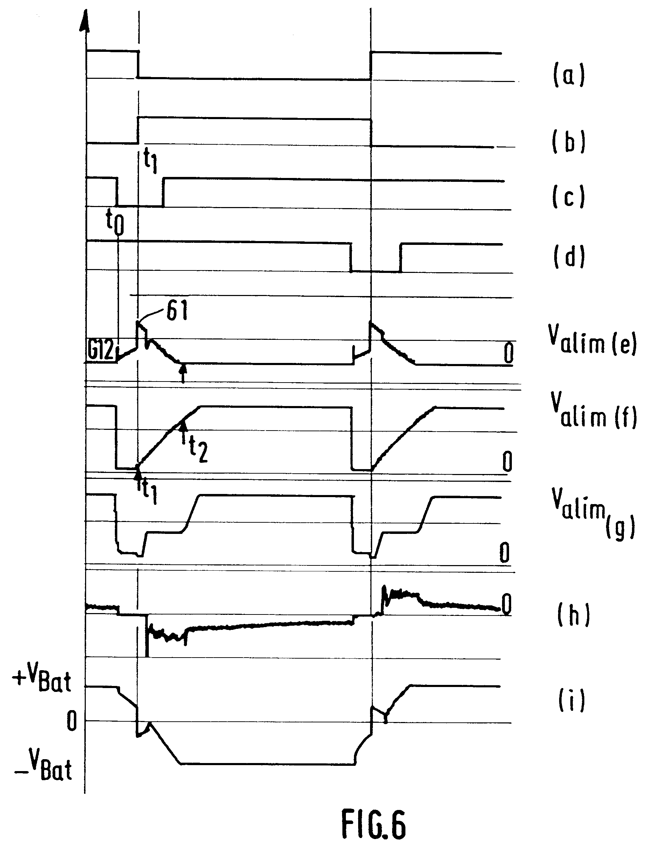

A la figure 6, on a représenté les chronogrammes mesurés sur le montage de la figure 5. La figure 6a représente le fonctionnement du relais 30, tandis que la figure 6b représente le fonctionnement du relais 31. On remarque, que la transition d'état de fonctionnement se fait en opposition de phase dans le mode de réalisation préféré. Cette transition de phase a lieu à la date t₁ qui suit la date t₀ de détection de fin de course CFC1 (voir figure 6c).

Lors de la détection de la fin de course, la tension de grille du transistor T (voir figure 6g) descend vers la valeur nulle. La commutation rapide fait apparaître un très léger pic de commutation 61 sur la tension drain-source du transistor T (voir figure 6e).

Quand le circuit de commande produit l'ordre de changement d'état des relais 30 et 31 (figures 6a et 6b), la tension aux bornes du moteur s'inverse par rapport à la tension nulle.

Puis, le port de sortie 54 produit à la date t₁ une rampe de mise en conduction qui dure au moins jusqu'à l'instant t₂ auquel le transistor T est pleinement conducteur et présente une tension sensiblement nulle.

A cet instant, la tension aux bornes du moteur est inversée et vaut sensiblement -Vbat.

De même lorsque le contact de fin de course produit le signal CFC2 (créneau descendant, figure 6d), un cycle semblable démarre et ne sera pas expliqué plus avant.

Lors d'essais, les inventeurs ont constaté :
- une forte réduction des vibrations et du bruit au changement de sens de marche du système d'entraînement ;
- la possibilité d'utiliser un relais plus simple avec une seule bobine de commande pour chacun des relais 30 et 31 du fait de leur commande en opposition de phase simplifiée ;
- la boucle d'asservissement et la mesure de la tension aux bornes du transistor T, qui sert d'interrupteur commandable, peuvent être facilement intégrées dans un circuit spécialisé comme un ASIC avec la logique de pilotage de la fonction, ce qui limite le surcoût de la fonction au seul transistor dans la version la plus simple.

Dans le cas de l'application du système d'entraînement selon l'invention à un système d'essuyage, les inventeurs ont constaté que la distance parcourue par le balais d'essuyage pendant la phase où le moteur n'est pas alimenté varie nettement en fonction des frottements sur la vitre balayée, ou encore en fonction de la tension d'alimentation de la commande.

Les frottements varient fortement selon l'état d'humidité et de mouillabilité de la surface de la vitre, tandis que la tension d'alimentation de la commande dépend par exemple de la tension de la batterie dont on sait que dans l'environnement automobile elle peut être soumise à de brusques variations.

Pour porter remède à cet inconvénient dans l'application d'essuyage, les inventeurs ont utilisé dans le circuit intégré qui réalise le circuit de commande 50, un circuit de comptage du temps écoulé entre les deux dernières informations délivrées par les capteurs de fin de course. Le temps compté par le compteur implémenté dans ce circuit intégré est directement lié aux frottements et à la tension d'alimentation.

La valeur du temps de retard Te, mesurée à l'aide du compteur précité, permet d'adresser une table de valeurs d'un temps de retard Tr qui est destinée à être ajoutée à l'information de fin de course CFC1 et CFC2 délivrée par les capteurs de fin de course pour produire l'information d'ouverture des transistors T et le déclenchement du changement de sens de marche par l'inversion de l'état des relais.

D'une manière générale, si le temps mesuré Te est court le temps de retard Tr introduit est nul, quand le temps mesuré Te augmente le retard Tr augmente aussi. Pendant ce retard, la commande d'alimentation du moteur reste maximum et le moteur peut ainsi parcourir un angle plus important que celui qui serait parcouru en l'absence de retard.

Dans une expérimentation, réalisée avec un véhicule, le temps de balayage varie entre 0,8 et 2 secondes. Pour réduire la dispersion angulaire sur un grand nombre de balayage à une valeur comprise entre + et -5° d'angle, on a constaté que quatre valeurs de retard suffisaient:

| Te | retard sur l'information de fin de course Tr |
|---|---|
| -d'une seconde | 0 |
| de 1 à 1,2 seconde | 30ms |
| de 1,2 à 1,4 seconde | 60ms |
| +de 1,4 seconde | 120ms |

Ainsi l'invention permet de résoudre l'ensemble du problème posé et améliore sensiblement la fonction d'essuyage.

## Revendications

1. Dispositif électronique de commande d'un moteur électrique à courant continu à deux bornes d'entraînement, fonctionnant en va et vient, notamment pour système d'essuyage comportant :
- un moyen de détection d'une commande d'inversion du sens de rotation du moteur,
- un circuit de commande qui reçoit le signal de détection et produit en réponse un signal de commande,
- un interrupteur commandé (5) connecté entre l'une ou l'autre des deux bornes du moteur électrique et une polarité d'alimentation et dont l'électrode de commande reçoit le signal de commande, le signal de commande ouvrant l'interrupteur commandé puis rétablissant lentement sa conduction, de façon à réduire les bruits de retournement, ledit circuit de commande (50) comportant un générateur (54) d'un signal en forme de rampe qui met lentement et de manière asservie l'interrupteur commandé (T) en pleine conduction lorsque la commande de retournement a été envoyée au moteur (1), caractérisé en ce que le circuit générateur (54) est programmé de manière à démarrer la génération de la rampe de mise en conduction de l'interrupteur (T) au bout d'une durée prédéterminée (t₁-t₀) après la date d'ouverture (t₀) de l'interrupteur (T).

2. Dispositif selon la revendication 1, caractérisé en ce que le circuit générateur (54) détermine la date (t₁) de génération de la rampe ainsi que la forme de la rampe en fonction de la tension mesurée (VDS) aux bornes de l'interrupteur commandé (T), tension mesurée à l'aide d'un circuit comparateur (56) dont la sortie est analysée par un circuit (55) du circuit de commande (50).

3. Dispositif selon l'une des revendications précédentes, caractérisé en ce que l'interrupteur commandé est un transistor bipolaire, ou préférentiellement, un transistor à effet de champ de type MOS.

4. Dispositif selon l'une quelconque des revendications précédentes, caractérisé en ce que la commande de retournement du sens d'entraînement est simultanée et en opposition de phase sur deux relais (30,31) montés de part et d'autre du moteur (1) et dont une borne (32-1,32-2) est connectée à une première polarité (préférentiellement un potentiel +VBAT), tandis que l'autre borne (33-1,33-2) est connectée à une seconde polarité (préférentiellement la masse électrique) par l'intermédiaire de l'interrupteur commandé (5).

5. Application à un système d'essuyage de vitre de véhicule, caractérisé en ce qu'il comporte un dispositif électronique selon l'une des revendications précédentes, et en ce que le moyen pour engendrer le signal de commande de retournement est constitué par au moins un capteur de fin de course (37-39).

6. Application selon la revendication 5, caractérisé en ce que, pour réduire les variations angulaires de balayage entraînées par les frottements et les variations de tension batterie, le circuit de commande (50) comporte aussi un compteur du temps (Te) écoulé depuis le changement d'état des deux capteurs de fin de course (FC1,FC2) et une mémoire adressée en fonction du temps (Te) écoulé mesuré par le compteur pour produire un temps de retard (Tr) qui est ajouté à la date (t₀) de détection de fin de course avant de produire l'ouverture de l'interrupteur commandé et au moins l'arrêt du moteur (1) de façon à rattraper le retard (Te).
